# EUROPÄISCHE PATENTANMELDUNG

(11) **EP 4 648 154 A1**
(43) Veröffentlichungstag der Anmeldung: **12.11.2025**
(21) Anmeldenummer: 25162650.3
(22) Anmeldetag: 10.03.2025
(51) Int. Cl.: H01M 10/04

(54) **VERFAHREN UND VORRICHTUNG ZUR BEREITSTELLUNG EINES ELEKTRODENSTRANGS UNTER EINSATZ VON LINERMATERIAL SOWIE VERWENDUNGEN DAVON**

(71) Anmelder: Grob-Werke GmbH & Co. KG, 87719 Mindelheim (DE)
(72) Erfinder: Fritz, Alexander, 89297 Schießen (DE)
(74) Vertreter: KASTEL Patentanwälte PartG mbB

(57) **Zusammenfassung**

Zur Reduzierung von Aufwand und Kosten einer Zellherstellung in einem kontinuierlichen Verfahren bei hoher Qualität schafft die Erfindung ein Elektrodenstrangbereitstellverfahren zum Bereitstellen wenigstens eines Elektrodenstrangs (32, 88), der wenigstens eine Separatorbahn (34.1, 34.2) sowie wenigstens ein daran fixiertes Elektrodenmaterial (50.1, 50.2, 36.1, 36.2) aufweist, umfassend
a) Laminieren eines ersten Elektrodenmaterials (50.1, 36.1) an eine erste Separatorbahn (34.1) in einer ersten Laminierstation (46.1) mittels eines ersten Laminierwerkzeugs (76.1) unter Zwischenfügen einer Linerbahn (100), um ein Anhaften von zu laminierendem Material an dem ersten Laminierwerkzeug (76.1) zu verhindern,
b) Laminieren eines zweiten Elektrodenmaterials (50.2, 36.2) an eine Separatorbahn (34.1, 34.2) in einer zweiten Laminierstation (46.2) mittels eines zweiten Laminierwerkzeugs (76.2) unter Zwischenfügen einer Linerbahn (100), um ein Anhaften von zu laminierenden Material an dem zweiten Laminierwerkzeug (76.2) zu verhindern,
wobei in Schritt a) und b) dieselbe Linerbahn (100) verwendet wird.

## Beschreibung

Die Erfindung betrifft ein Elektrodenstrangbereitstellverfahren zum Bereitstellen wenigstens eines Elektrodenstrangs, der wenigstens eine Separatorbahn sowie wenigstens ein daran fixiertes Elektrodenmaterial aufweist. Weiter betrifft die Erfindung ein Batteriezell-Herstellverfahren zum Herstellen von Monozellen oder Halbzellen für eine Batterie unter Einsatz eines solchen Elektrodenstrangbereitstellverfahrens sowie ein Batteriezellstapelherstellverfahren zum Herstellen eines Zellstapels für eine Batterie unter Einsatz eines solchen Batteriezell-Herstellverfahrens. Weiter betrifft die Erfindung eine Elektrodenstrangbereitstellvorrichtung für eine Batterieherstellanlage sowie eine damit versehene Batterieherstellanlage.

Die Erfindung liegt auf dem Gebiet der Fertigung von Elektrodenanordnungen und insbesondere von Batteriezellen und Zellverbünden hierfür. Mehr insbesondere liegt die Erfindung auf dem technischen Gebiet von Großserienanlagen zur Großserienherstellung von Batteriezellen. Insbesondere sollen Batteriezellen zur Verwendung in der Elektromobilität, insbesondere Batteriezellen für die Hauptstromversorgung von Elektrofahrzeugen, wie insbesondere Personenkraftwagen und Lastkraftwagen, in Großserie gefertigt werden.

Zum technologischen Hintergrund sowie zum Stand der Technik wird auf folgende Literaturstellen verwiesen:
[1] EP 4 456 225 A1
[2] EP 4 456 224 A1
[3] WO 2020/192845 A1
[4] WO 2020/231186 A1
[5] CN 112909351 A
[6] EP 4 455 064 A1

Aus den Literaturstellen [1] bis [6] sind Verfahren und Vorrichtungen zur Bereitstellung von Elektrodensträngen sowie zur Herstellung von Monozellen und daraus gebildeten Batteriestapeln bekannt. Insbesondere beschreiben [1], [6] und [2] eine Anlage zur Produktion von Batteriezellen, bei der als Elektrodenstränge ein Anodenstrang mit auf einem ersten bahnförmigen Separator (S) angebrachten Anoden (A) und ein Kathodenstrang mit auf einem zweiten bahnförmigen Separator (S) angebrachten Kathoden (K) bereitgestellt werden, wobei daraus ein Strangverbund gebildet wird, von dem Monozellen oder Halbzellen vereinzelt werden. [4] und [5] beschreiben Verfahren und Vorrichtungen zur Bereitstellung von Elektrodensträngen für die Herstellung von Batterien, wobei Elektroden auf eine Separatorbahn unter Einsatz von Linern (auch Opferfolien genannt) auflaminiert werden. Im Gegensatz zum Beispiel zum Verfahren des Z-Faltens von Batteriezellen handelt es sich hierbei um einen kontinuierlichen Prozess. Der Vorteil liegt hierbei in der höheren Ausbringung aufgrund eines kontinuierlichen Verfahrens. Beispielsweise werden in der Anlage in der nachfolgenden Reihenfolge Separator, Anode, Separator, Kathode (SASK) miteinander laminiert. Durch Stapeln von vereinzelten SASK-Lagen entsteht die Grundlage der Batteriezelle.

Insbesondere beschreibt [4] eine Herstellung von Monozellen aus Anode, Kathode und zwei Separatoren. In einem ersten Schritt wird die erste Elektrode von einer ersten Elektrodenbahn vereinzelt und auf einen ersten Separator auflaminiert. Hierfür kommt als Prozesshilfsstoff ein erster Liner zum Einsatz, der von einer Vorratsrolle abgewickelt wird, zwischen ersten Elektroden und Laminierwerkzeug eingeführt wird und nach dem ersten Laminationsschritt auf eine weitere Rolle aufgewickelt wird. In einem zweiten Laminationsschritt wird die zweite Elektrode vereinzelt und zusammen mit einem zweiten Separator auf einer Rückseite des ersten Separators auflaminiert. Hierfür kommt als Prozesshilfsstoff ein weiterer Liner zum Einsatz, der zwischen ein zweites Laminierwerkzeug und den Elektrodenstrang eingeführt und danach wieder aufgewickelt wird.

[5] beschreibt die Herstellung einer Monozelle in einem einzigen Laminationsschritt. Um das Problem der Anhaftung von Separatormaterial an heiße Oberflächen, die zur Lamination nötig sind, zu verhindern, kommt hier jeweils auf jeder Seite ebenfalls ein Liner zum Einsatz. Der jeweilige Liner wird vor der Lamination von einer jeweiligen Vorratsrolle abgewickelt und direkt nach der Lamination wieder auf eine Rolle aufgewickelt.

Die Erfindung hat sich zur Aufgabe gestellt, die Bereitstellung von Elektrodensträngen mit hoher Prozesssicherheit und Qualität hinsichtlich Materialaufwand und anlagentechnischem Aufwand zu verändern, insbesondere zu verbessern.

Zum Lösen dieser Aufgabe schafft die Erfindung die Verfahren, Vorrichtungen und Anlagen gemäß den unabhängigen Ansprüchen. Vorteilhafte Ausgestaltungen sind Gegenstand der Unteransprüche.

Die Erfindung schafft gemäß einem ersten Aspekt davon ein Elektrodenstrangbereitstellverfahren zum Bereitstellen wenigstens eines Elektrodenstrangs, insbesondere für die Herstellung von Batteriezellen, wobei der Elektrodenstrang wenigstens eine Separatorbahn sowie wenigstens ein daran fixiertes Elektrodenmaterial aufweist, umfassend
a) Laminieren eines ersten Elektrodenmaterials an eine erste Separatorbahn in einer ersten Laminierstation mittels eines ersten Laminierwerkzeugs unter Zwischenfügen einer Linerbahn, insbesondere zwischen (erstem) Separator und (erstem) Laminierwerkzeug, um ein Anhaften von zu laminierendem Material an dem ersten Laminierwerkzeug zu verhindern,
b) Laminieren eines zweiten Elektrodenmaterials an eine Separatorbahn, insbesondere an eine zweite Separatorbahn, in einer zweiten Laminierstation mittels eines zweiten Laminierwerkzeugs unter Zwischenfügen einer Linerbahn, insbesondere zwischen (zweitem) Separator und (zweitem) Laminierwerkzeug, um ein Anhaften von zu laminierendem Material an dem zweiten Laminierwerkzeug zu verhindern,
   wobei in Schritt a) und b) dieselbe Linerbahn verwendet wird.

Einige Ausführungsformen des Elektrodenstrangbereitstellverfahren umfassen den Schritt:
c) Führen der kontinuierlichen Linerbahn von der ersten Laminierstation zu der zweiten Laminierstation.

Bei einigen Ausführungsformen ist vorgesehen, dass Schritt c) den folgenden Schritt umfasst:
c1) Trennen des Liners von einem in Schritt a) erhaltenen ersten Elektronenstrang und Führen des Liners über eine eigene Linerführung.

Bei einigen Ausführungsformen ist vorgesehen, dass Schritt c) den folgenden Schritt umfasst:
c2) gemeinsames Führen des Liners zusammen mit dem in Schritt a) erhaltenen ersten Elektronenstrang zu der zweiten Laminierstation.

Bei einigen Ausführungsformen ist vorgesehen, dass Schritt a) den folgenden Schritt umfasst:
a1) Zuführen der ersten Separatorbahn zu der ersten Laminierstation.

Bei einigen Ausführungsformen ist vorgesehen, dass Schritt a) den folgenden Schritt umfasst:
a2) Zuführen des ersten Elektrodenmaterials in Form vereinzelter relativ zueinander positionierter erster Elektrodensegmente zu der ersten Laminierstation.

Bei einigen Ausführungsformen ist vorgesehen, dass Schritt a) den folgenden Schritt umfasst:
a3) Verwenden wenigstens einer ersten temperierten Laminierwalze als erstes Laminierwerkzeug.

Bei einigen Ausführungsformen ist vorgesehen, dass Schritt a) den folgenden Schritt umfasst:
a4) Abwickeln des Liners von einer Linervorratsrolle.

Bei einigen Ausführungsformen ist vorgesehen, dass Schritt a) den folgenden Schritt umfasst:
a5) Zuführen der Linerbahn zwischen die erste Separatorbahn und das erste Laminierwerkzeug.

Bei einigen Ausführungsformen ist vorgesehen, dass Schritt a) den folgenden Schritt umfasst:
a6) seitliches Ausrichten der Linerbahn so, dass sie die in Schritt a) zu laminierende erste Separatorbahn überdeckt.

Bei einigen Ausführungsformen ist vorgesehen, dass Schritt a) den folgenden Schritt umfasst:
a7) Einstellen der Bahnspannung der Linerbahn beim Zuführen zu der ersten Laminierstation.

Bei einigen Ausführungsformen ist vorgesehen, dass Schritt a) den folgenden Schritt umfasst:
a8) Einstellen der Bahngeschwindigkeit der Linerbahn zur Anpassung an die Geschwindigkeit der der ersten Laminierstation zugeführten ersten Separatorbahn.

Bei einigen Ausführungsformen ist vorgesehen, dass Schritt a) den folgenden Schritt umfasst:
a9) Einstellung der Position der Linerbahn in Bewegungsrichtung zur Anpassung an Positionen von der ersten Laminierstation zugeführten einzelnen ersten Elektrodensegmenten.

Bei einigen Ausführungsformen ist vorgesehen, dass Schritt a) den folgenden Schritt umfasst:
a10) Bereitstellen eines ersten Elektrodenstrangs, der die erste Separatorbahn und das daran anlaminierte erste Elektrodenmaterial aufweist.

Bei einigen Ausführungsformen ist vorgesehen, dass Schritt a) den folgenden Schritt umfasst:
a11) Aufpressen des ersten Laminierwerkzeugs über die Linerbahn auf die erste Separatorbahn.

Bei einigen Ausführungsformen ist vorgesehen, dass Schritt a) den folgenden Schritt umfasst:
a12) Temperieren der ersten Laminierstation zum Erwärmen der ersten Separatorbahn.

Bei einigen Ausführungsformen ist vorgesehen, dass Schritt b) den folgenden Schritt umfasst:
b1) Zuführen eines in Schritt a) erhaltenen ersten Elektrodenstrangs zu der zweiten Laminierstation.

Bei einigen derzeit bevorzugten Ausführungsformen ist vorgesehen, dass Schritt b) den folgenden Schritt umfasst:
b2) Zuführen einer zweiten Separatorbahn zu der zweiten Laminierstation vorzugsweise derart, dass die Separatorbahn, auf die in der zweiten Laminierstation das zweite Elektrodenmaterial auflaminiert wird, die zweite Separatorbahn ist.

Bei einem möglichen Verfahren kann das zweite Elektrodenmaterial in der zweiten Laminierstation auf der Rückseite der ersten Separatorbahn auflaminiert werden, so dass die Separatorbahn, auf die in Schritt b) das zweite Elektrodenmaterial auflaminiert wird, die erste Separatorbahn ist.

Bei einigen Ausführungsformen ist vorgesehen, dass Schritt b) den folgenden Schritt umfasst:
b3) Laminieren des zweiten Elektrodenmaterials und/oder einer zweiten Separatorbahn an den in Schritt a) erhaltenen ersten Elektrodenstrang.

Bei einigen Ausführungsformen ist vorgesehen, dass Schritt b) den folgenden Schritt umfasst:
b4) Zuführen des zweiten Elektrodenmaterials in Form vereinzelter relativ zueinander positionierter zweiter Elektrodensegmente zu der zweiten Laminierstation.

Bei einigen Ausführungsformen ist vorgesehen, dass Schritt b) den folgenden Schritt umfasst:
b5) Verwenden wenigstens einer zweiten Laminierwalze als zweites Laminierwerkzeug.

Bei einigen Ausführungsformen ist vorgesehen, dass Schritt b) den folgenden Schritt umfasst:
b6) Zuführen der Linerbahn zwischen die in Schritt b) zu laminierende Separatorbahn und das zweite Laminierwerkzeug.

Bei einigen Ausführungsformen ist vorgesehen, dass Schritt b) den folgenden Schritt umfasst:
b7) Laminieren des zweiten Elektrodenmaterials an eine zweite Separatorbahn.

Bei einigen Ausführungsformen ist vorgesehen, dass Schritt b) den folgenden Schritt umfasst:
b8) Bereitstellen eines zweiten Elektrodenstrangs, der die zweite Separatorbahn und das daran anlaminierte zweite Elektrodenmaterial aufweist, durch das Laminieren in Schritt b).

Bei einigen Ausführungsformen ist vorgesehen, dass Schritt b) den folgenden Schritt umfasst:
b9) Auferlegen von Druck und/oder Wärme auf das zweite Laminierwerkzeug.

Bei einigen Ausführungsformen ist vorgesehen, dass Schritt b) den folgenden Schritt umfasst:
b10) seitliches Ausrichten der Linerbahn so, dass sie die in Schritt b) zu laminierende Separatorbahn überdeckt.

Bei einigen Ausführungsformen ist vorgesehen, dass Schritt b) den folgenden Schritt umfasst:
b11) Einstellen der Bahnspannung der Linerbahn beim Zuführen zu der zweiten Laminierstation.

Bei einigen Ausführungsformen ist vorgesehen, dass Schritt b) den folgenden Schritt umfasst:
b12) Einstellen der Bahngeschwindigkeit der Linerbahn zur Anpassung an die Geschwindigkeit der in der zweiten Laminierstation zu laminierenden Separatorbahn.

Bei einigen Ausführungsformen ist vorgesehen, dass Schritt b) den folgenden Schritt umfasst:
b13) Einstellung der Position der Linerbahn in Bewegungsrichtung zur Anpassung an Positionen von der zweiten Laminierstation zugeführten einzelnen zweiten Elektrodensegmenten.

Einige Ausführungsformen des Elektrodenstrangbereitstellverfahrens umfassen weiter den Schritt:
d) Durchführen eines dritten Laminierschritts in einer dritten Laminierstation mittels eines dritten Laminerwerkzeugs, um
   d1) einen, insbesondere in Schritt a) erhaltenen, ersten Elektrodenstrang und einen, insbesondere in Schritt b) erhaltenen, zweiten Elektrodenstrang zu einem Verbundstrang zu verbinden oder
   d2) um weitere Lagen von Separatorbahn und/oder Elektrodenmaterial an einen, insbesondere in Schritt a) erhaltenen, Elektrodenstrang anzulaminieren,
wobei dieselbe Linerbahn wie in Schritt a) und b) zwischen das dritte Laminierwerkzeug und das zu laminierende Material eingefügt wird.

Einige Ausführungsformen des Elektrodenstrangbereitstellverfahrens umfassen weiter den Schritt:
e) Bereitstellen der Linerbahn aus einem Liner ausgewählt aus der Gruppe, die eine Kunststofffolie, eine PET-Folie, eine Bahn aus Verbundstoff und eine Bahn aus einem Kunststoffgemisch aufweist.

Einige Ausführungsformen des Elektrodenstrangbereitstellverfahrens umfassen weiter den Schritt:
f) Aufwickeln der Linerbahn nach der letzten Laminierstation.

Einige Ausführungsformen des Elektrodenstrangbereitstellverfahrens umfassen weiter den Schritt:
g) Zurückführen der Linerbahn nach der letzten Laminierstation zu der ersten Laminierstation.

Einige Ausführungsformen des Elektrodenstrangbereitstellverfahrens umfassen weiter den Schritt:
h) Führen der Linerbahn in einer Endlosführung oder einer Endlosschleife.

Einige Ausführungsformen des Elektrodenstrangbereitstellverfahrens umfassen weiter den Schritt:
i) Führen der Linerbahn über Umlenkrollen, Führungsrollen und/oder ein Tänzersystem.

Gemäß einem weiteren Aspekt schafft die Erfindung ein Batteriezell-Herstellverfahren zum Herstellen von Monozellen oder Halbzellen für eine Batterie, umfassend
Bereitstellen wenigstens eines Elektrodenstrangs mittels des Elektrodenstrangbereitstellverfahrens nach einer der voranstehenden Ausgestaltungen, und Vereinzeln der Monozellen oder Halbzellen von dem wenigstens einen Elektrodenstrang.

Gemäß einem weiteren Aspekt schafft die Erfindung ein Batteriezellstapelherstellverfahren zum Herstellen eines Zellstapels für eine Batterie, umfassend Durchführen des Batteriezell-Herstellverfahrens nach einer der voranstehenden Ausgestaltungen und Aufstapeln der dadurch hergestellten Batteriezellen zu einem Zellstapel.

Gemäß einem weiteren Aspekt schafft die Erfindung eine Elektrodenstrangbereitstellvorrichtung für
eine Batterieherstellanlage, wobei die Elektrodenstrangbereitstellvorrichtung zum Bereitstellen wenigstens eines Elektrodenstrangs, der wenigstens eine Separatorbahn sowie wenigstens ein daran fixiertes Elektrodenmaterial aufweist, eingerichtet ist und
eine Separatorbahnbereitstelleinrichtung zum Bereitstellen einer oder mehrerer Separatorbahnen, eine Elektrodenmaterialbereitstelleinrichtung zum Bereitstellen eines ersten Elektrodenmaterials und/oder eines zweiten Elektrodenmaterials,
eine erste Laminierstation mit einem ersten Laminierwerkzeug zum Laminieren von Elektrodenmaterial und Separatorbahn
eine zweite Laminierstation mit einem zweiten Laminierwerkzeug zum Laminieren von Elektrodenmaterial und Separatorbahn, sowie
eine Linerhandlingseinrichtung zum Handling eines Liners aufweist, die dazu eingerichtet ist, eine Linerbahn über das erste Laminierwerkzeug zu führen, um in der ersten Laminierstation Anhaften von zu laminierendem Material an dem ersten Laminierwerkzeug zu vermeiden, und von da über das zweite Laminierwerkzeug zu führen, um in der zweiten Laminierstation Anhaften von zu laminierendem Material an dem zweiten Laminierwerkzeug zu verhindern.

Bei einigen Ausführungsformen der Elektrodenstrangbereitstellvorrichtung weist die Linerhandlingseinrichtung eine Abwickeleinheit zum Abwickeln der Linerbahn von einer Vorratsrolle auf.

Bei einigen Ausführungsformen der Elektrodenstrangbereitstellvorrichtung weist die Linerhandlingseinrichtung eine Bahnspannungseinheit zum Einstellen der Bahnspannung der Linerbahn beim Zuführen zu der ersten und/oder der zweiten Laminierstation auf.

Bei einigen Ausführungsformen der Elektrodenstrangbereitstellvorrichtung weist die Linerhandlingseinrichtung eine Bahnseitenführung zum Einstellen einer seitlichen Ausrichtung der Linerbahn beim Zuführen zu der ersten und/oder der zweiten Laminierstation auf.

Bei einigen Ausführungsformen der Elektrodenstrangbereitstellvorrichtung weist die Linerhandlingseinrichtung Umlenkrollen, Führungsrollen und/oder wenigstens eine Tänzereinheit auf.

Bei einigen Ausführungsformen der Elektrodenstrangbereitstellvorrichtung weist die Linerhandlingseinrichtung eine Aufwickeleinheit zum Aufwickeln der Linerbahn nach der letzten Laminierstation auf.

Bei einigen Ausführungsformen der Elektrodenstrangbereitstellvorrichtung weist die Linerhandlingseinrichtung wenigstens eine Verbindungsstation auf, die dazu eingerichtet ist, ein Ende eines vorangegangenen Linersegments mit einem Anfang eines nachfolgenden Linersegments zu verbinden, um so die durchgehende Linerbahn aus mehreren Linersegmenten zu erhalten.

Bei einigen Ausführungsformen der Elektrodenstrangbereitstellvorrichtung weist die Linerhandlingseinrichtung eine Endlosführung auf, die dazu eingerichtet ist, die Linerbahn als Endlosbahn von der letzten Laminierstation zurück zu der ersten Laminierstation zu führen.

Bei einigen Ausführungsformen der Elektrodenstrangbereitstellvorrichtung weist die Linerhandlingseinrichtung eine Einheit zur Regelung der Bahngeschwindigkeit der Linerbahn auf.

Bei einigen Ausführungsformen der Elektrodenstrangbereitstellvorrichtung weist die Linerhandlingseinrichtung eine insbesondere computerimplementierte Steuereinheit auf.

Bei einigen Ausführungsformen ist vorgesehen, dass die Linerhandlingseinrichtung eine Abtrenneinheit zum Abtrennen der Linerbahn von einem aus der ersten Laminierstation laufenden ersten Elektrodenstranges und eine eigene Linerführung zwischen der ersten und der zweiten Laminierstation aufweist, die dazu ausgebildet ist, die Linerbahn von der ersten Laminierstation zu der zweiten Laminierstation zu führen.

Einige Ausführungsformen der Elektrodenstrangbereitstellvorrichtung weisen eine Elektrodenstrang- und linerbahnführung zum Führen eines in der ersten Laminierstation gebildeten ersten Elektrodenstrangs zusammen mit der Linerbahn zu der zweiten Laminierstation auf.

Gemäß einem weiteren Aspekt schafft die Erfindung eine Batterieherstellanlage umfassend eine oder mehrere Elektrodenstrangbereitstellvorrichtungen nach einer der voranstehenden Ausgestaltungen sowie eine Vereinzelungseinrichtung zum Vereinzeln von Batteriezellen von einem oder mehreren der damit bereitgestellten Elektrodenstränge.

Einige Ausführungsformen der Elektrodenstrangbereitstellvorrichtung oder der Batterieherstellanlage weisen eine insbesondere computerimplementierte Steuerung auf, die dazu eingerichtet ist, die Vorrichtung bzw. Anlage zum Durchführen des Verfahrens nach einer der voranstehenden Ausgestaltungen zu veranlassen.

Ausgestaltungen der Erfindung betreffen die Reduktion von Linereinsatz/ Hilfsstoff in einer Monozellproduktion. Ausgestaltungen der Erfindung finden insbesondere bei der (industriellen Großserien-)Herstellung von Batteriezellen und Batterien für die Elektromobilität Verwendung.

Vorteilhafte Verwendungen von Ausgestaltungen der Erfindung finden sich in der Stackassemblierung von Lithium-Ionen-Batteriezellen. Besonders vorteilhafte Verwendungen betreffen die Herstellung von Batteriezellen durch ein kontinuierliches Verfahren mit durchgängiger Bahn.

Die Herstellung von Batteriezellen durch ein kontinuierliches Verfahren mit durchgängiger Bahn bietet einige Vorteile hinsichtlich der Taktzeit. Wird dies durch die Lamination einzelner Elektroden an den Separator realisiert, so kann dies bei einigen Separatoren Hilfsstoffe für die Lamination, wie insbesondere Liner, erforderlich machen.

So kann es beispielsweise während des Laminationsprozesses, z.B. durch Beheizen der Laminationswalzen, zur Anhaftung des Separators an die beteiligten Laminationswalzen kommen. Die aufgebrachte Beschichtung (bspw. PVDF-Beschichtung) auf dem Separator sorgt dafür, dass die Elektroden auf den Separator auflaminiert werden. Zusätzlich kann der dafür notwendige Druck dafür sorgen, dass sich Anhaftungen (= Rückstände des Separatormaterials und/oder Separatorbeschichtung) des Separators an den beteiligten Laminationswalzen bilden. Um dies zu verhindern, wird bei einigen Ausführungsformen der Liner zwischen die Laminationstrommel und den Separator eingebracht.

Vorteilhafte Ausgestaltungen der Erfindung betreffen insbesondere die mehrfache Verwendung eines Liners (z.B. Opferfolie) als Prozesshilfsstoff bei der Herstellung von Monozellen, SAS-Paketen und deren Derivate, um Anlagentechnik, Footprint und Materialkosten einzusparen.

Der Einsatz von Linern oder Prozesshilfsstoffen in Laminierstationen bei der Bereitstellung von Elektrodensträngen sind zwar beispielsweise aus [4] und [5] an sich bekannt. Dabei wird in [4] aber ein Liner nur jeweils für einen Laminationsschritt verwendet und anschließend wieder aufgewickelt. Bei [5] wird nur ein Laminationsschritt durchgeführt, wobei auf beiden Seiten jeweils ein Liner eingesetzt wird. In den Verfahren gemäß dem Stand der Technik sind somit immer wenigstens zwei separate Opferfolien (=Liner) notwendig.

Der bisher bekannte Stand der Technik verwendet für jeden Laminationsschritt eine eigene Zuführung für den Prozesshilfsstoff, Liner genannt. Dementsprechend muss für jeden Laminationsschritt eine separate Ab- und Aufwicklung für den Liner vorgesehen werden. Dies resultiert, insbesondere bei zwei oder mehr Laminationsschritten, in einem erhöhten Bauraumbedarf, sowie erhöhten Kosten (z.B. durch erhöhten Materialbedarf, erhöhten Energiebedarf der Anlage, etc.).

Vorteilhafte Ausgestaltungen der Erfindung befassen sich mit der Reduktion der benötigten Prozesshilfsstoffe (= Liner) sowie der Reduktion des Anlagen-Footprint (z.B. Energieeinsparung) und damit einhergehend die Reduktion der Anzahl eingesetzter Komponenten zur Kostenreduktion.

Zur Erreichung des Ziels wird bei Ausgestaltungen der Erfindung der Liner für zwei oder mehr Laminationsschritte verwendet.

Einige Ausführungsformen betreffen ein im Zuge der Herstellung von Zellen für eine Batterie durchzuführendes Verfahren zum Bereitstellen eines Elektrodenstrangs, wobei in einer ersten Laminierstation erstes Elektrodenmaterial auf eine Separatorbahn auflaminiert wird und in einer zweiten Laminierstation zweites Elektrodenmaterial auf eine Separatorbahn auflaminiert wird. Dabei wird dieselbe Linerbahn in der ersten Laminierstation zwischen dem Laminierwerkzeug und dem zu laminierenden Material, insbesondere zwischen Laminierwerkzeug und Separatorbahn, und in der zweiten Laminierstation zwischen dem Laminierwerkzeug und dem zu laminierenden Material, insbesondere zwischen Laminierwerkzeug und Separatorbahn eingefügt.

Für eine sinnvolle Integration des Systems ist bei einigen Ausführungsformen vorgesehen, dass der Liner auf einem Abwickler sitzt, der eine Verschiebung einer Spannwelle quer zur Bahnrichtung ausführen kann, um die Opferfolie deckungsgleich zur Separatorbahn durch die Laminationsstelle fahren zu können.

Für eine feinere und faltenfreie Bahnführung können bei Coils, also auf eine Rolle aufgewickeltes Material, die als Eingangsmaterial eine schlechtere Eingangsqualität in Bezug auf die Aufwicklung des Materials aufweisen - z.B. Teleskopierung, also ein "unsauberes" Aufwickeln des Materials auf eine Rolle beim Herstellen des Coils, d.h., die Seitenkanten liegen nicht fluchtend aufeinander, sondern sind teilweise versetzt zueinander (sie "wandern" auf einer bestimmten Breite des Coils hin und her) - auch sogenannte Drehrahmen zur Bahnkorrektur eingesetzt werden.

Für einen effizienten Wechsel des rollenförmig bereitgestellten Materials sind bei einigen Ausführungsformen in der Bahn Spleißtische zum Verbinden der Bahn eingesetzt. Diese können je nach Kundenwunsch automatisiert oder händisch die Bahn der neuen und alten Rolle (=Coils) miteinander verbinden, sodass die Produktionsunterbrechung so kurz wie möglich ausfällt (z.B. Wendewickler, manueller Spleißtisch).

Um die Auf- und/oder Abwickler bzgl. Bahnspannung und/oder Fördergeschwindigkeit zu regeln, sind bei einigen Ausführungsformen Messwalzen für die Bahnspannungsregelung des Liners beziehungsweise des Verbunds aus Liner und Halbzelle (Separator + Elektrode) vorgesehen. Bei einigen Ausführungsformen wird diese Aufgabe alternativ (oder zusätzlich) von einem sogenannten Tänzer erledigt, der zusätzlich zur reinen Bahnspannungsregelung die Möglichkeit zur Speicherung kleiner Bahnmengen bietet.

Bei einigen Ausführungsformen wird die Geschwindigkeit des Liners ebenfalls exakt zur Bahngeschwindigkeit der Separatorbahn geregelt: Damit lassen sich Risiken von Beschädigungen oder Positionsverlusten während des Laminationsvorgangs verringern.

Bei einigen Ausführungsformen erfolgt die Geschwindigkeitsregelung über das Messen des Durchmessers des Coils und Verrechnung mit der Abwickeldrehzahl.

Einige Ausführungsformen von Verfahren, Vorrichtungen und Anlagen gemäß der Erfindung gehen von den in [1], [2], oder [6] beschriebenen und gezeigten Verfahren, Vorrichtungen und Anlagen aus. In diesen Literaturstellen wird insbesondere die Herstellung einer Halbzelle inklusive dem Vereinzeln und Übergeben der Elektroden, sowie die Herstellung eines S-A-S-Pakets im Einzelnen beschrieben. Über die Verfahren, Vorrichtungen und Anlagen gemäß [1], [2], oder [6] hinaus nutzen Ausführungsformen der Erfindung zusätzlich Prozesshilfsstoffe (=Liner), wie bspw. PET. Dabei ist im Vergleich zu [4] und [5] nur ein reduzierter Einsatz dieser Prozesshilfsstoffe vorgesehen.

Bei einigen Ausführungsformen sind anstelle von Linern aus PET aber auch andere Materialien, insbesondere andere Kunststoffe und/oder andere Kunststoffgemische denkbar.

Ein besonderes Merkmal besonders bevorzugter Ausgestaltungen der Erfindung ist das Verwenden eines einzigen Liners für zwei oder mehr Laminationsschritte.

Vorteilhafte Ausführungsformen der Erfindung weisen insbesondere einen, mehrere oder alle der folgenden Vorteile auf:
- Entfall mechanischer Komponenten, wie bspw. Wickeldorne. Dies bedingt einen vereinfachten Aufbau und/oder reduzierten Bauraum
- Platzeinsparung durch Entfall mechanischer Komponenten
- Kosteneinsparung durch Reduktion der Verwendung von Prozesshilfsstoffen betreiberseits; bei Ausgestaltungen der Erfindung wird das Opfermaterial innerhalb des Prozesses mehrfach verwendet
- Reduzierung von Stillstandzeiten aufgrund reduziertem Materialeinsatz, weil ein Coil der Opferfolie mehrfach in dem Prozess verwendet wird. Ein Wechsel des Coils erfolgt "nur" 1x statt 2x, wie im Fall, wenn zwei Coils in den Prozess integriert sind, da Coils in der Regel unterschiedliche Materiallängen aufweisen.

Bei einigen Ausführungsformen wird das Verfahren derart durchgeführt, dass Separator und Opferfolie immer "deckungsgleich" aufeinanderliegen. Dies ist vorteilhaft, da die Elektroden Abdrücke auf der Opferfolie hinterlassen, die, wenn sich die Relativlage von Separator und Opferfolie von "Station 1" (=erster Einsatz der Opferfolie innerhalb des Prozesses) zu "Station 2" (=zweiter Einsatz der Opferfolie innerhalb des Prozesses) ändert, auf den Separator übertragen. Somit lässt sich das Risiko eines Ausschusses verringern.

Ausführungsbeispiele werden im Folgenden anhand der beigefügten Zeichnungen näher erläutert. Darin zeigt:
- Fig. 1: eine schematische Übersichtsdarstellung einer ersten Ausführungsform einer Batterieherstellanlage zum Herstellen von Batteriezellstapeln;
- Fig. 2: eine vergrößerte Darstellung des Details II von Fig. 1;
- Fig. 3: eine schematische Übersichtsdarstellung einer zweiten Ausführungsform einer Batterieherstellanlage zum Herstellen von Batteriezellstapeln;
- Fig. 4: eine vergrößerte Darstellung des Details IV von Fig. 3;
- Fig. 5: einen schematische Darstellung eines möglichen Aufbaus einer Linerbahnführung einer Linerhandlingseinrichtung vor Einlaufen in eine erste Laminierstation einer Batterieherstellanlage; und
- Fig. 6: eine stark vereinfachte schematische Darstellung einer weiteren Ausführung einer Linerhandlingseinrichtung mit Endlosführung.

Im Folgenden werden unter Bezug auf die beigefügten Zeichnungen Verfahren, Vorrichtungen 24 und Anlagen 20 zum Bereitstellen wenigstens eines Elektrodenstrangs 32, 88 und zum Herstellen von Monozellen 86 oder Halbzellen, insbesondere durch Vereinzeln der Monozellen 86 oder Halbzellen von dem wenigstens einen Elektrodenstrang 32, 88 beschrieben.

In den Figuren sind Ausführungen einer Batterieherstellanlage 20 dargestellt, die eine Elektrodenstrangbereitstellvorrichtung 24 zum Bereitstellen wenigstens eines Elektrodenstrangs 32, 88, eine Vereinzelungseinrichtung 90 zum Vereinzeln von Batteriezellen von einem oder mehreren der mit der Elektrodenstrangbereitstellvorrichtung 24 bereitgestellten Elektrodenstränge 32, 88, eine Stapeleinrichtung 26 zum Bilden eines Batteriezellstapels 22 und eine Steuerung 48 aufweist.

Der wenigstens eine Elektrodenstrang 32, 88 weist wenigstens eine Separatorbahn 34.1, 34.2 sowie wenigstens ein daran fixiertes Elektrodenmaterial 36.1, 36.2, 50.1, 50.2 auf.

Die dargestellten Ausführungen der Elektrodenstrangbereitstellvorrichtung 24 der Batterieherstellanlage 20 sind zum Bereitstellen wenigstens eines Elektrodenstrangs 88 in Form eines Monozellenstrangs (Verbundstrang enthaltend mehrere Elektrodenstränge) ausgebildet. Bei anderen möglichen Ausführungen stellt die Elektrodenstrangbereitstellvorrichtung einen ersten Elektrodenstrang 32 in Form eines Halbzellenstrangs, z.B. einen Anodenstrang mit Anodenmaterial, und einen zweiten Elektrodenstrang in Form eines zweiten Halbzellenstrangs, z.B. einen Kathodenstrang mit Kathodenmaterial bereit, von denen Halbzellen vereinzelt werden oder die zu einem Monozellenstrang verbunden werden.

Zum Bereitstellen des wenigstens einen Elektrodenstrangs 32, 88 wird ein Elektrodenstrangbereitstellverfahren durchgeführt mit den Schritten:
a) Laminieren eines ersten Elektrodenmaterials 50.1, 36.1 an eine erste Separatorbahn 34.1 in einer ersten Laminierstation 46.1 mittels eines ersten Laminierwerkzeugs 76.1 (z.B. einer erste Laminierwalze oder einer erste Laminationstrommel) unter Zwischenfügen einer Linerbahn 100, um ein Anhaften von zu laminierendem Material an dem ersten Laminierwerkzeug 76.1 zu verhindern, und
b) Laminieren eines zweiten Elektrodenmaterials 50.2, 36.2 an eine Separatorbahn, hier beispielsweise eine zweite Separatorbahn 34.2, in einer zweiten Laminierstation 46.2 mittels eines zweiten Laminierwerkzeugs 76.2 (z.B. einer zweiten Laminierwalze oder zweite Laminationstrommel) unter Zwischenfügen einer Linerbahn 100, um ein Anhaften von zu laminierendem Material an dem zweiten Laminierwerkzeug 76.2 zu verhindern.

Dabei wird in den Schritten a) und b) dieselbe Linerbahn 100 verwendet.

Die in den Figuren als Teil der Batterieherstellanlage 20 dargestellte Elektrodenstrangbereitstellvorrichtung 24 ist zum Bereitstellen des wenigstens einen Elektrodenstrangs 88, der wenigstens eine Separatorbahn 34.1, 34.2 sowie wenigstens ein daran fixiertes Elektrodenmaterial 36.1, 36.2, 50.1, 50.2 aufweist, eingerichtet und weist eine Separatorbahnbereitstelleinrichtung 44.1, 44.2, eine Elektrodenmaterialbereitstelleinrichtung 92.1, 92.2, die erste Laminierstation 46.1 mit dem ersten Laminierwerkzeug 76.1, die zweite Laminierstation 46.2 mit dem zweiten Laminierwerkzeug 76.2 und eine Linerhandlingseinrichtung 94 auf.

Die Separatorbahnbereitstelleinrichtung 44.1, 44.2 ist zum Bereitstellen einer oder mehrerer Separatorbahnen 34.1, 34.2 eingerichtet. Bei den dargestellten Ausführungen weist die Elektrodenstrangbereitstellvorrichtung 24 eine erste Separatorbahnbereitstelleinrichtung 44.1 zum Bereitstellen einer ersten Separatorbahn 34.1 zu der ersten Laminierstation 46.1 und eine zweite Separatorbahnbereitstelleinrichtung 44.2 zum Bereitstellen einer zweiten Separatorbahn 34.2 zu der zweiten Laminierstation 46.2 auf.

Die Elektrodenmaterialbereitstelleinrichtung 92.1, 92.2 ist zum Bereitstellen eines ersten Elektrodenmaterials 50.1, 36.1 und/oder eines zweiten Elektrodenmaterials 50.2, 36.2 ausgebildet. Bei den dargestellten Ausführungsformen weist die Elektrodenstrangbereitstelleinrichtung 24 eine erste Elektrodenmaterialbereitstelleinrichtung 92.1 zum Bereitstellen eines ersten Elektrodenmaterials 50.1, 36.1 an der ersten Laminierstation 46.1 und eine zweite Elektrodenmaterialbereitstelleinrichtung 92.2 zum Bereitstellen eines zweiten Elektrodenmaterials 50.2, 36.2 an der zweiten Laminierstation 46.2 auf. Bei den dargestellten Ausführungsformen sind die Elektrodenmaterialbereitstelleinrichtungen 92.1, 92.2 jeweils dazu ausgebildet, das Elektrodenmaterial in Form von einzelnen Elektrodensegmenten 36.1, 36.2 mit passendem Abstand zueinander an der jeweiligen Laminierstation 46.1, 46.2 bereitzustellen.

Die Laminierstationen 46.1, 46.2 dienen jeweils zum Laminieren von Elektrodenmaterial und Separatorbahn.

Die Linerhandlingseinrichtung 94 dient zum Handling eines Liners (auch Opferfolie genannt) und ist dazu eingerichtet, die Linerbahn 100 über das erste Laminierwerkzeug 76.1 zu führen, um in der ersten Laminierstation 46.1 ein Anhaften von zu laminierendem Material an dem ersten Laminierwerkzeug 76.1 zu vermeiden, und von da die Linerbahn 100 über das zweite Laminierwerkzeug 76.2 zu führen, um in der zweiten Laminierstation 46.2 ein Anhaften von zu laminierendem Material an dem zweiten Laminierwerkzeug zu verhindern.

Bei der dargestellten Ausführung der Elektrodenstrangbereitstellvorrichtung 24 wird ein Monozellenstrang als Elektrodenstrang 88 derart bereitgestellt, dass zunächst in einer Halbzellenstrangbereitstelleinrichtung 28, die die erste Laminierstation 46.1 aufweist, ein Halbzellenstrang 32 ausgebildet wird, der die erste Separatorbahn 34.1 und darauf anlaminierte erste Elektrodensegmente 36.1 aufweist. Der Halbzellenstrang 32 wird zu der zweiten Laminierstation 46.2 geleitet, um darauf direkt zweite Elektrodensegmente 36.2 zu positionieren und samt zweiter Separatorbahn 34.2 anzulaminieren. Aus der zweiten Laminierstation 46.2 wird der als Monozellenstrang ausgebildete Elektrodenstrang 88 zu der Vereinzelungseinrichtung 90 zum Vereinzeln der Monozellen 86 geleitet. In der Stapeleinrichtung 26 werden aus den Monozellen 86 Batteriezellstapel 22 hergestellt.

Bei bevorzugten Ausgestaltungen, von denen Ausführungsbeispiele in den Zeichnungen dargestellt ist, ist der Aufbau der ersten und der zweiten Elektrodenmaterialbereitstelleinrichtung 92.1, 92.2 im Wesentlichen gleich und daher werden die Elektrodenmaterialbereitstelleinrichtungen 92.1, 92.2 im Folgenden gemeinsam beschrieben.

Die Elektrodenmaterialbereitstelleinrichtungen 92.1, 92.2 weisen jeweils eine Elektrodensubstratbereitstelleinrichtung 38.1, 38.2, ein Transportsystem 40.1, 40.2 und eine Schneideinrichtung 42.1, 42.2 auf.

Die Elektrodensubstratbereitstelleinrichtung 38.1, 38.2 ist zum Bereitstellen eines bahnförmigen Elektrodensubstrats 50.1, 50.2 ausgebildet. Beispielsweise weist die Elektrodensubstratbereitstelleinrichtung 38.1, 38.2 einen Rollenhalter für eine Vorratsrolle 52 mit dem jeweiligen bahnförmigen Elektrodensubstrat 50.1, 50.2 sowie wenigstens einen Antriebsmotor 58, M auf, der zur Regelung der Bahnspannung eingerichtet ist. Weiter ist optional eine Messwalze 108 vorgesehen, über die das bahnförmige Elektrodensubstrat 50.1, 50.2 geleitet wird und die die Abrolllänge und/oder die Abrollgeschwindigkeit, mit der das bahnförmige Elektrodensubstrat 50.1, 50.2 abgerollt und bereitgestellt wird, erfasst und eine entsprechende Information der Steuerung 48 zuleitet. Daten über die Lieferung des bahnförmigen Elektrodensubstrats 50.1, 50.2 können zusätzlich oder alternativ auch über die Stellung eines Tänzers (nicht dargestellt) ermittelt werden.

Außerdem weist die Elektrodensubstratbereitstelleinrichtung 38.1, 38.2 bei den dargestellten Ausführungsformen Ausrichtelemente 56, wie z.B. Rollen, und eventuell auch weitere Antriebe 58 zum Antreiben der Bewegung des bahnförmigen Elektrodensubstrats 50.1, 50.2 auf.

Das Transportsystem 40.1, 40.2 weist entlang einer umlaufenden Führungsbahn 60 einzeln bewegbare Transporteinheiten 62 auf. Die Bewegung der einzelnen Transporteinheiten 62 lässt sich einzeln durch die Steuerung 48 steuern. Das Transportsystem 40.1, 40.2 ist dazu eingerichtet, das von der Elektrodensubstratbereitstelleinrichtung 38.1, 38.2 bereitgestellte bahnförmige Elektrodensubstrat 50.1, 50.2 aufzunehmen und eben entlang einer Schneidebene 64 zu bewegen.

Beispielsweise weist die Führungsbahn 60 anschließend an eine Aufnahmestelle 66 einen geradlinigen Bereich auf, so dass sich die Oberflächen von Werkstückträgern der Transporteinheiten 62, auf denen das Elektrodensubstrat 50.1, 50.2 aufliegt und beispielsweise mittels Vakuums oder Greifern (nicht dargestellt) daran fixiert wird, entlang der Schneidebene 64 bewegen. Mit 65 ist hierbei der Bereich der Elektrodenfixierung bezeichnet, wo das Elektroden-substrat 50.1, 50.2 und die daraus vereinzelten Elektrodensegmente an den Transporteinheiten 62 fixiert sind.

Bei einigen Ausführungsformen sind die auf den Transporteinheiten 62 angebrachten Werkstückträger in dem Bereich der Elektrodenfixierung 65 an eine Vakuumquelle (nicht dargestellt) angeschlossen, um die Elektrodensegmente 36.1, 36.2 in diesem Bereich an den Transporteinheiten 62 zu fixieren. Bei bevorzugten Ausführungsformen wird auf der jeweiligen Transporteinheit 62 eine Vakuumpumpe zur Vakuumerzeugung (nicht dargestellt) mitgeführt, die z.B. über die Steuerung 48 individuell ansteuerbar ist. Bei weiteren Ausführungsformen (nicht dargestellt) sind an den Transporteinheiten 62 einzeln ansteuerbare Greifer vorgesehen.

Wie oben erwähnt, ist die Bewegung der Transporteinheiten 62 einzeln steuerbar. Bei einigen Ausführungsformen weist das Transportsystem 40.1, 40.2 hierzu insbesondere in der Steuerung 48 als Software implementierte Mittel zum Einstellen eines Abstands zwischen abgeschnittenen Elektrodensegmenten 36.1, 36.2 durch Relativbewegung der Transporteinheiten 62 auf, um die Elektrodensegmente 36.1, 36.2 relativ zueinander zu positionieren.

Die Schneideinrichtung 42.1, 42.2 ist zum Schneiden des Elektrodensubstrats 50.1, 50.2 entlang einer ein- oder zweidimensional in der Schneidebene 64 verlaufenden Schneidkontur ausgebildet.

Die jeweilige Separatorbahnbereitstelleinrichtung 44.1, 44.2 ist zum Bereitstellen der Separatorbahn 34.1, 34.2 eingerichtet. Analog zu der Elektrodensubstratbereitstelleinrichtung 38.1, 38.2 kann sie beispielsweise eine Vorratsrolle 52 mit der Separatorbahn 34.1, 34.2 und wenigstens einen Antrieb 58, der insbesondere zur Regelung der Bahnspannung eingerichtet ist und optional auch eine oder mehrere Messwalzen 108 oder sonstige Messaufnehmer, beispielsweise zur Erfassung der Position eines Tänzers, deren Signale ebenfalls an die Steuerung 48 geleitet werden, aufweisen. Auch können Ausrichtelemente 56 für die seitliche Bahnsteuerung vorgesehen sein.

Die erste Laminierstation 46.1 ist zum Aufbringen und Fixieren von mittels des ersten Transportsystems 40.1 relativ zueinander positioniert angelieferten ersten Elektrodensegmente 36.1 auf der ersten Separatorbahn 34.1, 34.2 ausgebildet, um so den Halbzellenstrang 32 zu bilden.

Die zweite Laminierstation 46.2 ist bei den dargestellten Ausführungen dazu eingerichtet und ausgebildet, die mittels des (zweiten) Transportsystems 40.2 der der zweiten Elektrodenmaterialbereitstelleinrichtung 92.2 relativ zueinander positioniert angelieferten zweiten Elektrodensegmente 36.2 zusammen mit der zweiten Separatorbahn 34.2 auf dem ersten Elektrodenstrang 32 direkt aufzubringen und fixieren.

Bei einigen Ausführungsformen weisen die erste und die zweite Laminierstation 46.1, 46.2 jeweils eine Heizeinrichtung 68 zum gezielten Erwärmen der Elektrodensegmente 36.1, 36.2 auf. Bei einigen Ausführungsformen weisen die erste und die zweite Laminierstation 46.1, 46.2 jeweils eine Transporteinrichtung 70 zum Transportieren und Abheben der relativ zueinander positionierten Elektrodensegmente 36.1, 36.2 von den Transporteinheiten 62 zu einer Laminierstelle 72 auf.

Bei den dargestellten Ausführungsformen ist als Transporteinrichtung 70 mit Heizeinrichtung 68 eine Vakuum-Heizwalze 74 vorgesehen, deren Oberfläche durch eine integrierte Heizung gezielt beheizbar ist und mit Ansaugöffnungen versehen ist, um die Elektrodensegmente 36.1, 36.2 anzusaugen. Alternativ kann auch eine temperierte Walze oder eine extern temperierte Vakuum-Walze vorgesehen sein.

Als Laminierwerkzeug 76.1, 76.2 weisen die erste und die zweite Laminierstation 46.1, 46.2 jeweils eine vorzugsweise unbeschichtete Laminierwalze auf, die mit der Presskraft F einer Presseinrichtung 78 auf die Transporteinrichtung 70, insbesondere die Vakuum-Heizwalze 74, gepresst wird. So werden in der ersten Laminierstation 46.1 die ersten Elektrodensegmente 36.1 auf die durch die erste Separatorbahnbereitstelleinrichtung 44.1 bereitgestellte erste Separatorbahn 34.1 laminiert, und in der zweiten Laminierstation 46.2 werden die zweiten Elektrodensegmente 36.2 zusammen mit der zweiten Separatorbahn 34.2 auf den durch die Halbzellenstrangbereitstelleinrichtung 28 bereitgestellten Halbzellenstrang 32 laminiert.

Bei den dargestellten Ausführungsbeispielen wird als Halbzellenstrang 32 ein Anodenstrang mit Anoden A als erste Elektrodensegmente 36.1 bereitgestellt. Als erster Laminierschritt a) findet somit in der ersten Laminierstation 46.1 eine Anodenlamination statt, bei dem Anodensegmente auf den ersten Separator auflaminiert werden. In der zweiten Laminierstation 46.2 werden der zweite Separator und Kathoden K als zweite Elektrodensegmente 36.2 auf den Anodenstrang auflaminiert. Die Linerbahn 100 wird zum Laminieren jeweils zwischen den ersten Separator und das Laminierwerkzeug 76.1, 76.2 eingeführt.

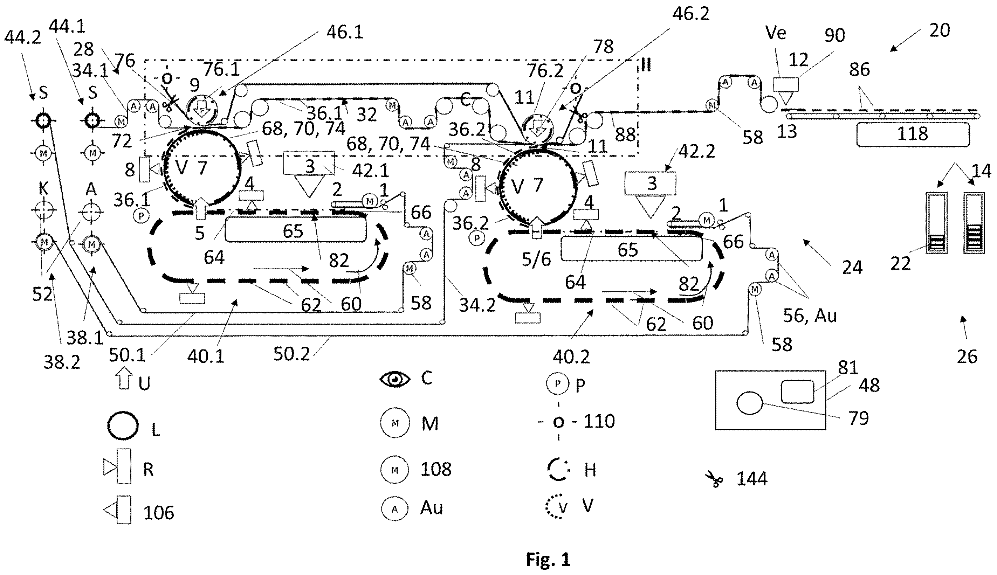

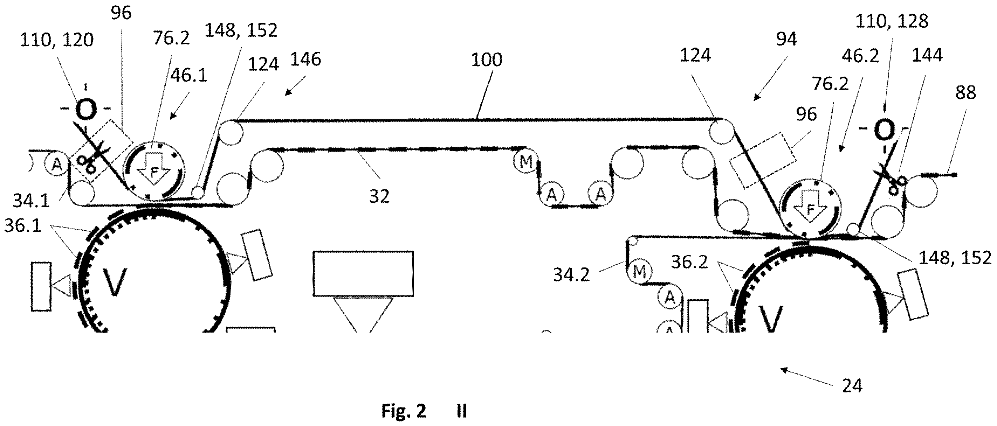

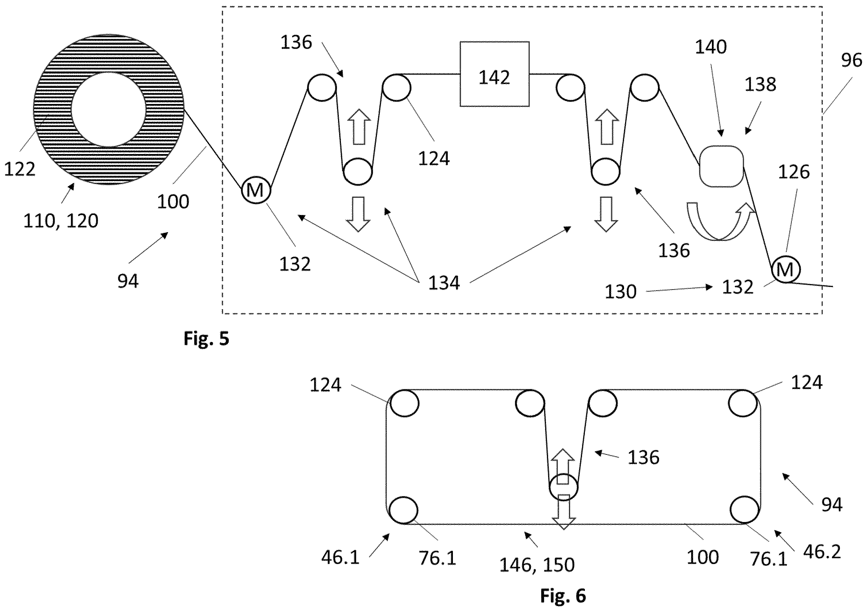

Im Folgenden wird ein beispielhafter Aufbau der Linerhandlingseinrichtung 92 gemäß einer ersten Ausführungsform anhand der Darstellung in Fig. 2 und Fig. 5 und Fig. 6 erläutert. Fig. 2 zeigt die Linerhandlingseinrichtung 94 in schematischer Darstellung als Detailansicht des Details II von Fig. 1. Fig. 5 zeigt einen schematischen möglichen Aufbau einer Linerbahnführung 96 der Linerhandlingseinrichtung 94 vor Einlaufen in die erste Laminierstation 46.1. Fig. 6 zeigt eine stark vereinfachte schematische Darstellung einer Ausführung der Linerhandlingseinrichtung 94 mit Endlosführung 145.

Wie in Fig. 2 dargestellt, weisen einige Ausführungsformen der Linerhandlingseinrichtung 94 eine Abwickeleinheit 110, 120 zum Abwickeln der Linerbahn 100 von einer Vorratsrolle 122, Umlenkrollen 124 und Führungsrollen 126 und eine Aufwickeleinheit 110, 128 zum Aufwickeln der Linerbahn 100 nach der letzten Laminierstation auf.

Bei einigen Ausführungsformen weist die Linerhandlingseinrichtung 94 eine Einheit 130 zur Regelung der Bahngeschwindigkeit der Linerbahn 100 auf. Beispielsweise ist hierzu in der Linerbahnführung 96 wenigstens eine motorisch angetriebene Antriebsrolle 132 vorgesehen, deren Antrieb M von der Steuerung 48 gesteuert wird.

Bei einigen Ausführungsformen weist die Linerhandlingseinrichtung 94 eine Bahnspannungseinheit 134 zum Einstellen der Bahnspannung der Linerbahn 100 beim Zuführen zu der ersten und/oder der zweiten Laminierstation 46.1, 46.2 auf. Beispielsweise ist hierzu in der Linerbahnführung 96 wenigstens eine Tänzereinheit 136 vorgesehen, die gesteuert über die Steuerung 48 die Bahnspannung einstellen kann. Eine solche Tänzereinheit 136 ist bei einigen Ausführungen, die hier nicht näher dargestellt sind, auch vor der zweiten Laminierstation 46.1 vorgesehen. Bei einigen Ausführungsformen kann die Bahnspannung auch über entsprechende Steuerung der Antriebsrollen 132 eingestellt werden. Auch dies kann entsprechend auch vor der zweiten Laminierstation 46.2 vorgesehen sein.

Bei einigen Ausführungsformen weist die Linerhandlingseinrichtung 94 eine Bahnseitenführung 138 zum Einstellen einer seitlichen Ausrichtung der Linerbahn 100 beim Zuführen zu der ersten und/oder der zweiten Laminierstation 46.1, 46.2 auf. Hierzu kann z.B. eine vor der Laminierstation 46.1, 46.2 liegende Führungsrolle 126 axial beweglich ausgebildet sein und/oder es wird ein Drehrahmen 140 verwendet, mit dem sich die seitliche Ausrichtung einstellen lässt. Auch dies wird durch die Steuerung 48 gesteuert.

Über die Linerbahnführung 96 lässt sich bei Bedarf auch die Position der Linerbahn 100 in deren Bewegungsrichtung einstellen.

Bei einigen Ausführungsformen, weist die Linerhandlingseinrichtung 94, beispielsweise als Teil der Linerbahnführung 96 weiter wenigstens eine Verbindungsstation 142 auf, die dazu eingerichtet ist, ein Ende eines vorangegangenen Linersegments mit einem Anfang eines nachfolgenden Linersegments zu verbinden, um so die durchgehende Linerbahn 100 aus mehreren Linersegmenten zu erhalten. Damit lässt sich ein Wechsel von einer leeren Vorratsrolle 122 zur nächsten vollen Vorratsrolle durchführen. Beispielsweise ist hierzu ein Splicertisch vorgesehen. Allgemein können Splicer und/oder Schnittvorrichtungen 144 vorgesehen sein

Bei den Ausführungen der Fig. 1 bis 5 weist die Linerhandlingseinrichtung 94 die Abwickeleinheit 120 und die Aufwickeleinheit 128 auf. Bei einigen Ausführungsformen, wie sie in Fig. 6 angedeutet sind, weist die Linerhandlingseinrichtung 94 dagegen eine Endlosführung 145 auf, die dazu eingerichtet ist, die Linerbahn 100 als Endlosbahn von der letzten Laminierstation, hier z.B. der zweiten Laminierstation 46.1, zurück zu der ersten Laminierstation 46.2 zu führen.

Der Betrieb der Linerhandlingseinrichtung 94 wird mit einer insbesondere computerimplementierten Steuereinheit gesteuert, die bei einigen Ausführungsformen als Teil der Steuerung 48 ausgebildet ist.

Die Steuerung 48 weist einen Prozessor 79 und einen Speicher 81 mit einem darin gespeicherten Computerprogramm auf, das die entsprechenden Anweisungen enthält, welche die Einheiten der Elektrodenstrangbereitstellvorrichtung 24 und der Batterieherstellanlage 20 veranlassen, das Elektrodenstrangbereitstellverfahren sowie das Verfahren zum Herstellen eines Batteriezellstapels durchzuführen. Dabei wird die Linerhandlingseinrichtung 94 entsprechend gesteuert.

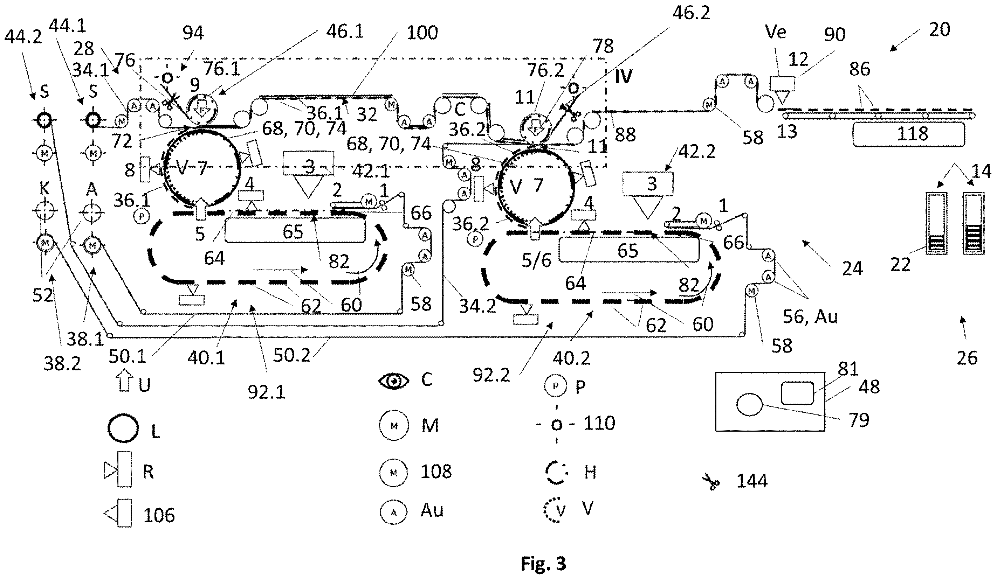

Konkrete bevorzugte Ausgestaltungen des Verfahrens zum Herstellen eines Batteriezellstapels 22 ergeben sich aus Fig. 1 und 3. Folgende Prozessschritte sind gezeigt:
1 Zuführung von Elektroden und Separatoren als Bahnmaterial in den Schneide- und Laminierungsprozess
2 Aufziehen der Bahn auf ein Transportsystem mit flexibel beweglichen Trägern für die vereinzelten Elektroden
3 Vereinzeln der Elektrodenbahnen sowohl für die Anode als auch für die Kathode
4 Optionale Reinigung der Elektroden
5 Übergabe der Elektroden auf die Vakuumwalze
6 Optional kann bei Bedarf eine Elektrode ausgelassen werden für die Bereitstellung einer Halbzelle beispielsweiße eines SAS-Paketes
7 Erwärmen der Elektroden
8 Optionale Reinigung der Elektroden
9 erster Laminierschritt (Beispiel für Schritt a); Laminierung der Halbzellen zu einem ersten Halbzellenstrang)
11 zweiter Laminierschritt (Beispiel für Schritt b); z.B. Laminierung zweiter Elektroden und gegebenenfalls einer zweiten Separatorbahn auf dem ersten Halbzellenstrang zum Bilden eines Elektrodenstrangs in Form eines Monozellenstrangs)
12 Vereinzeln der Monozellen
13 Übergabe der Monozellen an ein Transportband zur weiteren Verarbeitung
14 Stapeln der Monozellen zu einem Batteriezellstapel

Die in den Zeichnungen verwendeten Symbole bedeuten:
- 106: Laserschnitt
- 108: Messwalze
- 110: Ab- / Aufrollen Opferfolie (=Aufwickeleinheit/Abwickeleinheit
- 144: Splice/Schnittvorrichtung
- U: Übergabe Lamination
- R: Reinigung
- Ve: Vereinzelung
- C: Kontrolle
- M: Antrieb
- Au: Ausrichten
- P: Ausschleusung Elektrode
- H: Heizung
- V: Vakuum
- S: Separator
- K: Kathode(nsubstrat)
- A: Anode(nsubstrat)
- L: Laminationstrommel

Bei Prozesschritt 6 wird für die Bereitstellung eines SAS-Paketes (Beispiel für eine Abschlusszelle des Batteriestapels 22) in dem Elektrodenstrang 88 eine Lücke generiert, in dem ein Kathodensegment bei der Übergabe auf die Vakuum-Heizwalze 74 der Positionier- und Laminiereinrichtung 30 ausgelassen wird. Die dabei entstehende Lücke im Verbundstrang kann für die Bereitstellung einer Halbzelle im SAS-Format (Anode eingeschlossen in 2 Separatoren) genutzt werden.

Die Figuren 1 und 2 zeigen eine Ausführungsform - Variante 1 -, bei der die Linerbahn 100 zwischen den Laminerstationen 46.1, 46.2 auf einer eigenen Linerführung 146 geführt wird. Hierzu weist die Linerhandlingseinrichtung 94 eine Abtrenneinheit 148 zum Abtrennen der Linerbahn 100 von einem aus der ersten Laminierstation 46.1 laufenden ersten Elektrodenstranges 32 auf. Eine solche Abtrenneinheit 148 ist auch bei der zweiten und jeder weiteren Laminierstation 46.1 vorgesehen.

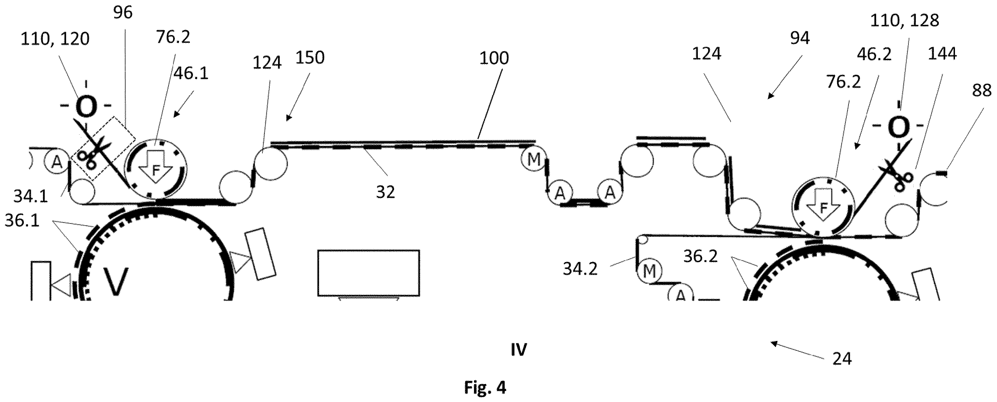

Die Fig. 3 und 4 zeigen eine Ausführungsform - Variante 2 -, bei der die Linerbahn 100 zwischen den Laminerstationen 46.1, 46.2 nicht auf einer eigenen Linerführung 146, sondern zusammen mit dem Halbzellenstrang 32 geführt wird. Diese Variante der Linerhandlingseinrichtung 94 weist somit eine Elektrodenstrang- und linerbahnführung 150 zum Führen eines in der ersten Laminierstation 46.1 gebildeten ersten Elektrodenstrangs 32 zusammen mit der Linerbahn 100 zu der zweiten Laminierstation 46.2 auf. Auch bei dieser Variante ist nach der letzten Laminierstation 46.2 die Abtrenneinheit 148 vorgesehen.

Das hier vorgestellte System zur Herstellung von Batteriezellen unter Linereinsatz gemäß Ausführungsbeispielen der Erfindung gliedert sich in mehrere Einheiten. Im Folgenden wird ein beispielhafter Prozessablauf in den einzelnen Einheiten näher erläutert.

Im Bereich der Anodenlamination - erste Laminierstation 46.1 - werden erste Elektroden A, 36.1 in definiertem Abstand an den Separator 34.1 an laminiert. Hierfür ist eine Laminationswalze - Beispiel für Laminationswerkzeug 76 - verbaut, die den notwendigen Gegendruck aufbringt. Die Laminationswalze kann beheizt werden. Um die Laminationswalze vor Ablagerungen des Separators 34.1 zu schützen und den Separator 34.1 am Anhaften an der Laminationswalze zu hindern, wird in diesem Teilprozess ein Liner 100 mit in den Prozess hineingegeben.

Nach der Lamination der Elektroden 36.1 an den Separator 34.1 zur Erzeugung der ersten Halbzelle kann der Liner 100 optional wieder von der Halbzellbahn - Halbzellenstrang 32 - abgetrennt werden, siehe Variante 1 wie in Fig. 2 dargestellt. Hierfür wird der Liner 100 über eine Umlenkrolle 152 mit sehr kleinem Durchmesser oder eine scharfe Kante geführt, um den Liner 100 von der Halbzellbahn - Halbzellenstrang 32 - zu trennen. Die Halbzellbahn 32 läuft bei der in Fig. 2 dargestellten Variante 1 geradeaus weiter wohingegen der Liner 100 abgelenkt wird. Bei dieser voneinander separaten Führung von Liner 100 und Halbzellbahn 32 können die Bahnspannungen für beide Materialien separat voneinander geregelt werden. Dies ist insbesondere dann von Vorteil, wenn der Liner 100 eine von der Halbzellbahn 32 verschiedene Dehnung aufweist (erfordert jedoch mehr Bauraum und mehr Einzelkomponenten, wie bspw. Umlenkrollen 124 und/oder Spannrollen/Tänzer 136 zur Regulierung der Bahnspannung des Liners 100 als die Variante 2). Es ist zu beachten, dass die unterschiedlichen Materialien unterschiedliche Dehnungen aufweisen können, die Bahnspannung aber so geregelt werden sollte, dass eine aus der Bahnspannung resultierende Dehnung für beide Materialien (=Liner und Separator) gleich groß sind. Um dabei kleinere Schwankungen ausgleichen zu können, kann hier ein Tänzer 136 verwendet werden.

Bei der Variante 1, in der die Halbzellbahn 32 sowie der Liner 100 voneinander getrennt werden, wird der Liner 100 über eine Bahnführung - Linerführung 146 - oberhalb (wobei die Position der Bahnführung abhängig von der Position des Liners (L), und genauer gesagt, von der Position des Separators ist) der ersten Halbzellbahn 32 bis zur Laminationsstelle 72 der Monozelle 88 - zweite Laminerstation 46.2 - geführt.

An der zweiten Laminierstation 46.2, die bei dem gezeigten Beispiel als Laminationsstelle 72 der Monozelle 88 dient, wird der Liner 100 zusammen mit der ersten Halbzellbahn 32, dem zweiten Separator 34.2 und den Kathodensheets K, 36.2 der Lamination zugeführt und nach der Lamination zur Erzeugung der Monozelle 88 wieder von der Monozellbahn - Monozellstrang, Elektrodenstrang 88 - abgetrennt. Hierfür wird der Liner 100 bspw. über eine weitere Umlenkrolle 152 mit sehr kleinem Durchmesser oder eine scharfe Kante geführt, um den Liner 100 von der Monozellbahn - Monozellstrang, Elektrodenstrang 88 - zu trennen.

Bei der Variante 2, von der ein Beispiel in Fig. 4 dargestellt ist, wird der Liner 100 nach dem ersten Laminationsschritt a), hier beispielhaft zur Erzeugung des ersten Elektrodenstrangs 32 - Halbzellbahn, Halbzellenstrang -, nicht von der Halbzellbahn abgeschält, sondern mit der Halbzellbahn 32 zusammen bis zum nächsten Laminationsschritt b), hier beispielhaft der Laminationsschritt zur Erzeugung der Monozelle, durch die Anlage 20 geführt. Bei dieser gemeinsamen Führung 150 von Liner 100 und Halbzellbahn 32 können Liner 100 und Habzellbahn 32 nur mit derselben Bahnspannung geregelt werden. Eventuelle Unterschiede in der Dehnung des Liners 100 und der Halbzellbahn 32 werden bei dieser Variante vor dem nächsten Laminationsschritt ggf. ausgeglichen, um eine Faltenbildung des Liners 100 und/oder der Halbzellbahn 32, insbesondere des Separators 34.1, zu vermeiden. Das bedeutet, wenn der Liner 100 sich beim Abkühlen stärker zusammenziehen will als der Separator 34.1, kann eine höhere Bahnspannung gefahren werden als eigentlich vorgesehen für den Separator 34.1, um zu verhindern, dass der Separator 34.1 (durch sein Anhaften an dem Liner 100) Falten schlägt. Andersherum, also wenn sich der Separator 34.1 stärker zusammenziehen will als der Liner 100, wird der Separator 34.1 am Liner 100 haften und sich nicht so stark zusammenziehen können, wie er es möchte. Die gemeinsame Führung 150 von Liner 100 und Halbzellbahn 32 ermöglicht jedoch eine Bauraumreduzierung (Bauraum für eine separate Führung 146 des Liners 100 ist nicht erforderlich), sowie eine Reduzierung von Komponenten, die für die Führung des Liners 100 und der Halbzellbahn 32 durch die Anlage erforderlich sind.

Nach der Lamination der Halbzellbahn 32, einem zweiten Separator 34.2 und zweiten Elektroden K, 36.2 zur Erzeugung einer Monozellbahn - Monozellstrang, Elektrodenstrang 88 - wird der Liner 100 von der Monozellbahn 88 abgetrennt. Hierfür wird der Liner 100 über eine Umlenkrolle 152 mit sehr kleinem Durchmesser oder eine scharfe Kante geführt, um den Liner 100 von der Monozellbahn 88 zu trennen. Die Monozellbahn 88 läuft bei dieser Variante geradeaus weiter wohingegen der Liner 100 abgelenkt wird.

Die Idee, denselben Liner in mehreren Laminierstationen 46.1, 46.2 zur Bereitstellung von durch Lamination erhältlichen Elektrodensträngen, wo Elektrodenmaterial auf einen Separator auflaminiert wird, ist auch auf Ausführungen anwendbar, wie sie in den Literaturstellen [1] und [2] beschrieben und gezeigt sind. Weitere Ausgestaltungen der Erfindung ergeben sich somit dadurch, dass die Vorrichtungen und Anlagen, wie sie in [1] und [2] gezeigt sind, mit der Linerhandlingseinrichtung 94 wie hier in den unterschiedlichen Varianten beschrieben, versehen werden, so dass derselbe Liner 100 in der ersten Laminierstation 46.1, der zweiten Laminierstation 46.2 und auch weiteren Laminierstationen verwendet werden. Beispielsweise weist die Elektrodenstrangbereitstellvorrichtung 24 dann eine erste Elektrodenstrangbereitstelleinrichtung auf, die wie die Halbzellenstrangbereitstelleinrichtung 28 mit der ersten Laminierstation 46.1 ausgebildet ist, und die einen Anodenstrang als ersten Elektrodenstrang - erster Halbzellenstrang 32 - bereitstellt. Weiter weist die Elektrodenstrangbereitstellvorrichtung 24 dann eine gleich wie die Halbzellenstrangbereitstelleinrichtung 28 aufgebaute zweite Elektrodenstrangbereitstelleinrichtung mit der zweiten Laminierstation 46.2 auf, mit der ein Kathodenstrang als zweiter Elektrodenstrang bereitgestellt wird. Es kann dann eine dritte Laminierstation vorgesehen sein, in der die beiden Halbzellenstränge zu einem Monozellstrang 88 (Verbundstrang) zusammenlaminiert werden. Der Liner wird hierbei in entsprechender Weise wie in den unterschiedlichen Varianten zum Verlauf zwischen der ersten und der zweiten Laminierstation 46.1, 46.2 erläutert, auch zwischen der zweiten und der dritten Laminierstation geführt.

Sollte demnach optional eine zusätzliche Laminationsstelle erforderlich sein (siehe [1] und [2]) können die oberen Schritte für weitere Laminationsschritte wiederholt werden.

Bei einigen Ausführungsformen wird der Liner 100 abschließend, also nach dem letzten durchzuführenden Laminationsschritt, aufgewickelt.

Wie in Fig. 6 gezeigt, ist es darüber hinaus sowohl in Variante 1 als auch in Variante 2 denkbar, für den Liner 100 eine sogenannte Endlosführung 145 zu verwenden. Dabei kann der Liner 100 nach der Erzeugung der Monozellbahn - Monozellstrang 88 - über die Umlenkrolle 152 oder eine scharfe Kante von der Monozellbahn abgehoben werden und dann über ein System aus zwei oder mehr Umlenk- und/oder Führungsrollen 124, 126 sowie ein Tänzersystem 136 (zum Ausgleich von Längenunterschieden bei der "Bandproduktion" (= Herstellung des aufgewickelten und als Endlosband verwendeten Materials) oder von thermischen Ausdehnungen) zum Ausgangspunkt zurückgeführt werden.

Zur Reduzierung von Aufwand und Kosten einer Zellherstellung in einem kontinuierlichen Verfahren bei hoher Qualität wird ein Elektrodenstrangbereitstellverfahren vorgeschlagen zum Bereitstellen wenigstens eines Elektrodenstrangs (32, 88), der wenigstens eine Separatorbahn (34.1, 34.2) sowie wenigstens ein daran fixiertes Elektrodenmaterial (50.1, 50.2, 36.1, 36.2) aufweist, umfassend
a) Laminieren eines ersten Elektrodenmaterials (50.1, 36.1) an eine erste Separatorbahn (34.1) in einer ersten Laminierstation (46.1) mittels eines ersten Laminierwerkzeugs (76.1) unter Zwischenfügen einer Linerbahn (100), um ein Anhaften von zu laminierendem Material an dem ersten Laminierwerkzeug (76.1) zu verhindern,
b) Laminieren eines zweiten Elektrodenmaterials (50.2, 36.2) an eine Separatorbahn (34.1, 34.2) in einer zweiten Laminierstation (46.2) mittels eines zweiten Laminierwerkzeugs (76.2) unter Zwischenfügen einer Linerbahn (100), um ein Anhaften von zu laminierenden Material an dem zweiten Laminierwerkzeug (76.2) zu verhindern,
wobei in Schritt a) und b) dieselbe Linerbahn (100) verwendet wird.

### Bezugszeichenliste:

1 Zuführung von Elektroden und Separatoren als Bahnmaterial in den Schneide- und Laminierungsprozess
2 Aufziehen der Bahn auf ein Transportsystem mit flexibel beweglichen Trägern für die vereinzelten Elektroden
3 Vereinzeln der Elektrodenbahnen sowohl für die Anode als auch für die Kathode
4 Optionale Reinigung der Elektroden
5 Übergabe der Elektroden auf die Vakuumwalze
6 Optional kann bei Bedarf eine Elektrode ausgelassen werden für die Bereitstellung einer Halbzelle beispielsweiße eines SAS-Paketes
7 Erwärmen der Elektroden
8 Optionale Reinigung der Elektroden
9 erster Laminierschritt (Beispiel für Schritt a); Laminierung der Halbzellen zu einem ersten Halbzellenstrang)
11 zweiter Laminierschritt (Beispiel für Schritt b); z.B. Laminierung zweiter Elektroden und gegebenenfalls einer zweiten Separatorbahn auf dem ersten Halbzellenstrang zum Bilden eines Monozellenstrangs)
12 Vereinzeln der Monozellen
13 Übergabe der Monozellen an ein Transportband zur weiteren Verarbeitung
14 Stapeln der Monozellen zu einem Batteriezellstapel
20 Batterieherstellanlage
22 Batteriezellstapel
24 Elektrodenstrangbereitstellvorrichtung (hier ausgebildet als Bereitstellvorrichtung zum Bereitstellen eines Monozellstrangs (z.B. Verbund von Elektrodensträngen))
26 Stapeleinrichtung
28 Halbzellenstrangbereitstelleinrichtung (Beispiel für erste Elektrodenstrangbereitstelleinrichtung)
32 erster Halbzellenstrang (Beispiel für einen ersten Elektrodenstrang)
34.1 erste Separatorbahn
34.2 zweite Separatorbahn
36.1 erstes Elektrodensegment
36.2 zweites Elektrodensegment
38.1 erste Elektrodensubstratbereitstelleinrichtung
38.2 zweite Elektrodensubstratbereitstelleinrichtung
40.1 erstes Transportsystem
40.2 zweites Transportsystem
42.1 erste Schneideinrichtung
42.2 zweite Schneideinrichtung
44.1 erste Separatorbahnbereitstelleinrichtung
44.2 zweite Separatorbahnbereitstelleinrichtung
46.1 erste Laminierstation
46.2 zweite Laminierstation
48 Steuerung
50.1 erstes bahnförmiges Elektrodensubstrat
50.2 erstes bahnförmiges Elektrodensubstrat
52 Vorratsrolle
56 Ausrichtelement
58 Antrieb
60 Führungsbahn
62 Transporteinheit
64 Schneidebene
65 Elektrodenfixierung
66 Aufnahmestelle
68 Heizeinrichtung
70 Transporteinrichtung
72 Laminierstelle
74 Vakuum-Heizwalze
76.1 erstes Laminierwerkzeug (z.B. erste Laminierwalze oder erste Laminationstrommel)
76.2 zweites Laminierwerkzeug (z.B. zweite Laminierwalze oder zweite Laminationstrommel)
78 Presseinrichtung
79 Prozessor
81 Speicher
82 Vereinzelungsstelle
86 Monozelle
88 Monozellen-Strang (Beispiel für Elektrodenstrang)
90 Vereinzelungseinrichtung
92.1 erste Elektrodenmaterialbereitstelleinrichtung
92.2 zweite Elektrodenmaterialbereitstelleinrichtung
94 Linerhandlingseinrichtung
96 Linerbahnführung
100 Linerbahn
106 Laserschnitt
108 Messwalze
110 Ab- / Aufrollen Opferfolie (=Aufwickeleinheit/Abwickeleinheit
118 Stapelbildung
120 Abwickeleinheit
122 Vorratsrolle
124 Umlenkrolle (Liner)
126 Führungsrolle (Liner)
128 Aufwickeleinheit
130 Einheit zur Regelung der Bahngeschwindigkeit
132 Antriebsrolle
134 Bahnspannungseinheit
136 Tänzereinheit
138 Bahnseitenführung
140 Drehrahmen
142 Verbindungsstation
144 Splice/Schnittvorrichtung
145 Endlosführung
146 Linerführung
148 Abtrenneinheit (zum Lösen der Linerbahn von dem Elektrodenstrang nach Laminieren)
150 Elektrodenstrang- und linerbahnführung
152 Umlenkrolle der Abtrenneinheit
U Übergabe Lamination
R Reinigung
Ve Vereinzelung
C Kontrolle
M Antrieb
Au Ausrichten
P Ausschleusung Elektrode
H Heizung
V Vakuum
S Separator
K Kathodensubstrat
A Anodensubstrat

## Patentansprüche

1. Elektrodenstrangbereitstellverfahren zum Bereitstellen wenigstens eines Elektrodenstrangs (32, 88), der wenigstens eine Separatorbahn (34.1, 34.2) sowie wenigstens ein daran fixiertes Elektrodenmaterial (50.1, 50.2, 36.1, 36.2) aufweist, umfassend
a) Laminieren eines ersten Elektrodenmaterials (50.1, 36.1) an eine erste Separatorbahn (34.1) in einer ersten Laminierstation (46.1) mittels eines ersten Laminierwerkzeugs (76.1) unter Zwischenfügen einer Linerbahn (100), um ein Anhaften von zu laminierendem Material an dem ersten Laminierwerkzeug (76.1) zu verhindern,
b) Laminieren eines zweiten Elektrodenmaterials (50.2, 36.2) an eine Separatorbahn (34.1, 34.2) in einer zweiten Laminierstation (46.2) mittels eines zweiten Laminierwerkzeugs (76.2) unter Zwischenfügen einer Linerbahn (100), um ein Anhaften von zu laminierenden Material an dem zweiten Laminierwerkzeug (76.2) zu verhindern,
wobei in Schritt a) und b) dieselbe Linerbahn (100) verwendet wird.

2. Elektrodenstrangbereitstellverfahren nach Anspruch 1, **gekennzeichnet durch** den Schritt:
c) Führen der kontinuierlichen Linerbahn (100) von der ersten Laminierstation zu der zweiten Laminierstation.

3. Elektrodenstrangbereitstellverfahren nach Anspruch 2, **dadurch gekennzeichnet, dass** Schritt c) umfasst:
c1) Trennen des Liners (100) von einem in Schritt a) erhaltenen ersten Elektronenstrang (32) und Führen des Liners (100) über eine eigene Linerführung (146); oder
c2) gemeinsames Führen des Liners (100) zusammen mit dem in Schritt a) erhaltenen ersten Elektronenstrang (32) zu der zweiten Laminierstation (46.1).

4. Elektrodenstrangbereitstellverfahren nach einem der voranstehenden Ansprüche, **dadurch gekennzeichnet,**
**dass** Schritt a) wenigstens einen oder mehrere der folgenden Schritte umfasst:
a1) Zuführen der ersten Separatorbahn (34.1) zu der ersten Laminierstation (46.1),
a2) Zuführen des ersten Elektrodenmaterials in Form vereinzelter relativ zueinander positionierter erster Elektrodensegmente (36.1) zu der ersten Laminierstation (46.2),
a3) Verwenden wenigstens einer ersten temperierten Laminierwalze als erstes Laminierwerkzeug (76.1);
a4) Abwickeln des Liners (100) von einer Linervorratsrolle (122);
a5) Zuführen der Linerbahn (100) zwischen die erste Separatorbahn (34.1) und das erste Laminierwerkzeug (76);
a6) seitliches Ausrichten der Linerbahn (100) so, dass sie die in Schritt a) zu laminierende erste Separatorbahn (34.1) überdeckt;
a7) Einstellen der Bahnspannung der Linerbahn (100) beim Zuführen zu der ersten Laminierstation (46.1);
a8) Einstellen der Bahngeschwindigkeit der Linerbahn (100) zur Anpassung an die Geschwindigkeit der der ersten Laminierstation (46.1) zugeführten ersten Separatorbahn (34.1);
a9) Einstellung der Position der Linerbahn (100) in Bewegungsrichtung zur Anpassung an Positionen von der ersten Laminierstation (46.1) zugeführten einzelnen ersten Elektrodensegmenten (36.1);
a10) Bereitstellen eines ersten Elektrodenstrangs (32), der die erste Separatorbahn (34.1) und das daran anlaminierte erste Elektrodenmaterial (50.1, 36.1) aufweist;
a11) Aufpressen des ersten Laminierwerkzeugs (76.1) über die Linerbahn (100) auf die erste Separatorbahn (34.1);
a12) Temperieren der ersten Laminierstation (46.1) zum Erwärmen der ersten Separatorbahn (34.1).

5. Elektrodenstrangbereitstellverfahren nach einem der voranstehenden Ansprüche, **dadurch gekennzeichnet,**
**dass** Schritt b) wenigstens einen oder mehrere der folgenden Schritte umfasst:
b1) Zuführen eines in Schritt a) erhaltenen ersten Elektrodenstrangs (32) zu der zweiten Laminierstation (46.2);
b2) Zuführen einer zweiten Separatorbahn (34.2) zu der zweiten Laminierstation (46.2);
b3) Laminieren des zweiten Elektrodenmaterials (50.2, 36.2) und/oder einer zweiten Separatorbahn (34.2) an den in Schritt a) erhaltenen ersten Elektrodenstrang (32);
b4) Zuführen des zweiten Elektrodenmaterials in Form vereinzelter relativ zueinander positionierter zweiter Elektrodensegmente (36.2) zu der zweiten Laminierstation (46.2);
b5) Verwenden wenigstens einer zweiten Laminierwalze als zweites Laminierwerkzeug (76.2);
b6) Zuführen der Linerbahn (100) zwischen die in Schritt b) zu laminierende Separatorbahn (34.1, 34.2) und das zweite Laminierwerkzeug (76.2);
b7) Laminieren des zweiten Elektrodenmaterials (50.2, 36.2) an eine zweite Separatorbahn (34.2);
b8) Bereitstellen eines zweiten Elektrodenstrangs, der die zweite Separatorbahn (34.2) und das daran anlaminierte zweite Elektrodenmaterial (50.2, 36.2) aufweist, durch das Laminieren in Schritt b);
b9) Auferlegen von Druck und/oder Wärme auf das zweite Laminierwerkzeug (76.2);
b10) seitliches Ausrichten der Linerbahn (100) so, dass sie die in Schritt b) zu laminierende Separatorbahn (34.1, 34.2) überdeckt;
b11) Einstellen der Bahnspannung der Linerbahn (100) beim Zuführen zu der zweiten Laminierstation (46.2);
b12) Einstellen der Bahngeschwindigkeit der Linerbahn (100) zur Anpassung an die Geschwindigkeit der in der zweiten Laminierstation zu laminierenden Separatorbahn (34.1, 34.2);
b13) Einstellung der Position der Linerbahn (100) in Bewegungsrichtung zur Anpassung an Positionen von der zweiten Laminierstation (46.2) zugeführten einzelnen zweiten Elektrodensegmenten (36.2).

6. Elektrodenstrangbereitstellverfahren nach einem der voranstehenden Ansprüche, **gekennzeichnet durch**
d) Durchführen eines dritten Laminierschritts in einer dritten Laminierstation mittels eines dritten Laminerwerkzeugs, um
d1) einen, insbesondere in Schritt a) erhaltenen, ersten Elektrodenstrang (32) und einen, insbesondere in Schritt b) erhaltenen, zweiten Elektrodenstrang zu einem Verbundstrang (88) zu verbinden oder
d2) um weitere Lagen von Separatorbahn und/oder Elektrodenmaterial an einen, insbesondere in Schritt a) erhaltenen, Elektrodenstrang anzulaminieren,
wobei dieselbe Linerbahn (100) wie in Schritt a) und b) zwischen das dritte Laminierwerkzeug und das zu laminierende Material eingefügt wird.

7. Elektrodenstrangbereitstellverfahren nach einem der voranstehenden Ansprüche, **gekennzeichnet durch** wenigstens einen oder mehrere der folgenden zusätzlichen Schritte:
e) Bereitstellen der Linerbahn (100) aus einem Liner ausgewählt aus der Gruppe, die eine Opferfolie, eine Kunststofffolie, eine PET-Folie, eine Bahn aus Verbundstoff und eine Bahn aus einem Kunststoffgemisch aufweist;
f) Aufwickeln der Linerbahn (100) nach der letzten Laminierstation (46.2);
g) Zurückführen der Linerbahn (100) nach der letzten Laminierstation (46.2) zu der ersten Laminierstation (46.1);
h) Führen der Linerbahn (100) in einer Endlosführung (145) oder einer Endlosschleife;
i) Führen der Linerbahn (100) über Umlenkrollen (124, 152) , Führungsrollen (126) und/oder ein Tänzersystem (136).

8. Batteriezell-Herstellverfahren zum Herstellen von Monozellen (86) oder Halbzellen für eine Batterie, umfassend
Bereitstellen wenigstens eines Elektrodenstrangs (32, 88) mittels des Elektrodenstrangbereitstellverfahrens nach einem der voranstehenden Ansprüche und Vereinzeln der Monozellen (86) oder Halbzellen von dem wenigstens einen Elektrodenstrang (32, 88).

9. Batteriezellstapelherstellverfahren zum Herstellen eines Zellstapels (22) für eine Batterie, umfassend Durchführen des Batteriezell-Herstellverfahrens nach Anspruch 8 und Aufstapeln der dadurch hergestellten Batteriezellen (86) zu einem Zellstapel (22).

10. Elektrodenstrangbereitstellvorrichtung (24) für eine Batterieherstellanlage (20), wobei die Elektrodenstrangbereitstellvorrichtung (24) zum Bereitstellen wenigstens eines Elektrodenstrangs (32, 88), der wenigstens eine Separatorbahn (34.1, 34.2) sowie wenigstens ein daran fixiertes Elektrodenmaterial (50.1, 36.1, 50.2, 36.2) aufweist, eingerichtet ist und
eine Separatorbahnbereitstelleinrichtung (44.1, 44.2) zum Bereitstellen einer oder mehrerer Separatorbahnen (34.1, 34.2),
eine Elektrodenmaterialbereitstelleinrichtung (92.1, 92.2) zum Bereitstellen eines ersten Elektrodenmaterials (50.1, 36.1) und/oder eines zweiten Elektrodenmaterials (50.2, 36.2),
eine erste Laminierstation (46.1) mit einem ersten Laminierwerkzeug (76.1) zum Laminieren von Elektrodenmaterial (50.1, 36.1) und Separatorbahn (34.1)
eine zweite Laminierstation (46.2) mit einem zweiten Laminierwerkzeug (76.2) zum Laminieren von Elektrodenmaterial (50.2, 36.2) und Separatorbahn (34.2), sowie
eine Linerhandlingseinrichtung (94) zum Handling eines Liners (100) aufweist, die dazu eingerichtet ist, eine Linerbahn (100) über das erste Laminierwerkzeug (76.1) zu führen, um in der ersten Laminierstation (46.1) Anhaften von zu laminierendem Material an dem ersten Laminierwerkzeug (76.1) zu vermeiden, und von da über das zweite Laminierwerkzeug (76.2) zu führen, um in der zweiten Laminierstation (46.2) Anhaften von zu laminierendem Material an dem zweiten Laminierwerkzeug (76.2) zu verhindern.

11. Elektrodenstrangbereitstellvorrichtung (24) nach Anspruch 10, **dadurch gekennzeichnet, dass** die Linerhandlingseinrichtung (94) wenigstens eine oder mehrere der folgenden Einheiten aufweist:
11.1 eine Abwickeleinheit (120) zum Abwickeln der Linerbahn (100) von einer Vorratsrolle (122);
11.2 eine Bahnspannungseinheit (134) zum Einstellen der Bahnspannung der Linerbahn (100) beim Zuführen zu der ersten und/oder der zweiten Laminierstation (46.1, 46.2);
11.3 eine Bahnseitenführung (138) zum Einstellen einer seitlichen Ausrichtung der Linerbahn (100) beim Zuführen zu der ersten und/oder der zweiten Laminierstation (46.1, 46.2);
11.4 Umlenkrollen (124, 152), Führungsrollen (126) und/oder wenigstens eine Tänzereinheit (136);
11.5 eine Aufwickeleinheit (128) zum Aufwickeln der Linerbahn (100) nach der letzten Laminierstation;
11.6 wenigstens eine Verbindungsstation (142), die dazu eingerichtet ist, ein Ende eines vorangegangenen Linersegments mit einem Anfang eines nachfolgenden Linersegments zu verbinden, um so die durchgehende Linerbahn (100) aus mehreren Linersegmenten zu erhalten;
11.7 eine Endlosführung (145), die dazu eingerichtet ist, die Linerbahn (100) als Endlosbahn von der letzten Laminierstation zurück zu der ersten Laminierstation (46.1) zu führen;
11.8 eine Einheit zur Regelung der Bahngeschwindigkeit der Linerbahn;
11.9 eine insbesondere computerimplementierte Steuereinheit.

12. Elektrodenstrangbereitstellvorrichtung (24) nach einem der Ansprüche 10 oder 11, **dadurch gekennzeichnet, dass** die Linerhandlingseinrichtung (94) eine Abtrenneinheit (148) zum Abtrennen der Linerbahn (100) von einem aus der ersten Laminierstation (46.1) laufenden ersten Elektrodenstranges (32) und eine eigene Linerführung (146) zwischen der ersten und der zweiten Laminierstation (46.1, 46.2) aufweist, die dazu ausgebildet ist, die Linerbahn (100) von der ersten Laminierstation (46.1) zu der zweiten Laminierstation (46.2) zu führen.

13. Elektrodenstrangbereitstellvorrichtung (24) nach einem der Ansprüche 10 oder 11, **gekennzeichnet durch** eine Elektrodenstrang- und linerbahnführung (150) zum Führen eines in der ersten Laminierstation (46.1) gebildeten ersten Elektrodenstrangs (32) zusammen mit der Linerbahn (100) zu der zweiten Laminierstation (46.2).

14. Batterieherstellanlage (20) umfassend eine oder mehrere Elektrodenstrangbereitstellvorrichtungen (24) nach einem der Ansprüche 10 bis 13 sowie eine Vereinzelungseinrichtung (90) zum Vereinzeln von Batteriezellen (86) von einem oder mehreren der damit bereitgestellten Elektrodenstränge (32, 88).

15. Elektrodenstrangbereitstellvorrichtung (24) nach einem der Ansprüche 10 bis 13 oder Batterieherstellanlage (20) nach Anspruch 14, **gekennzeichnet durch** eine insbesondere computerimplementierte Steuerung (48), die dazu eingerichtet ist, die Vorrichtung (24) bzw. Anlage (20) zum Durchführen des Verfahrens nach einem der Ansprüche 1 bis 9 zu veranlassen.
